# EUROPÄISCHE PATENTANMELDUNG

(11) **EP 0 727 884 A2**
(43) Veröffentlichungstag der Anmeldung: **21.08.1996**
(21) Anmeldenummer: 96101679.7
(22) Anmeldetag: 06.02.1996
(51) Int. Cl.: H04B 10/158

(54) **Schaltungsanordnung zur optischen Frequenzumsetzung**

(30) Priorität: 16.02.1995 DE 19505291
(71) Anmelder: SIEMENS AKTIENGESELLSCHAFT, 80333 München (DE)
(72) Erfinder: Derr, Frowin, Dr.-Ing., D-81379 München (DE)

(57) **Zusammenfassung**

In einer Schaltungsanordnung zur optischen Frequenzumsetzung mit einer schaltbaren Eingangsfilteranordnung mit einem an eine Eingangsfaser über einen 1:n-Faserschalter anschaltbaren, vom Eingangssignal in Multiplexerbetriebsrichtung durchlaufenen Wellenlängenkanalfilter eines mit einer Mehrzahl solcher Kanalfilter gebildeten Wellenlängenmultiplexers/-demultiplexers, einem vom Eingangssignal und einem Pumplasersignal gegensinnig durchlaufenen Frequenzumsetzer und einem Ausgangsfilter,ist das Ausgangsfilter durch einen vom Ausgangssignal in Demultiplexbetriebsrichtung durchlaufenen Wellenlängenkanalfilter des Wellenlängenmultiplexers/-demultiplexers gebildet, das ausgangsseitig mit der Ausgangsfaser verbunden ist.

## Beschreibung

Wesentliche Komponenten von Netzknoten in rein optischen Telekommunikationsnetzen sind optische Frequenzumsetzer zur Umsetzung eines optischen Signals von einer Eingangswellenlänge auf eine von der Eingangswellenlänge unterschiedliche Ausgangswellenlänge. Eine solche optische Frequenzumsetzung kann nach unterschiedlichen physikalischen Prinzipien, z.B. nach dem Prinzip der Cross Gain Modulation oder der Cross Phase Modulation vor sich gehen (siehe dazu auch ECOC'94, vol.2, 635...642), was indessen nicht Gegenstand der vorliegenden Erfindung ist und hier nicht näher betrachtet werden muss.

In der Praxis erweisen sich dabei Anordnungen zur optischen Frequenzumsetzung mit variabler Eingangswellenlänge und fester Ausgangswellenlänge als zweckmässig; solche Anordnungen benötigen ein schaltbares Eingangsfilter und ein Ausgangsfilter (siehe dazu auch IEEE Photon.Technol.Lett., 6(1994)1, 56...58; ECOC'93, paper TuC5.5).

Eine mögliche Konfiguration einer Schaltungsanordnung zur optischen Frequenzumsetzung umfasst eine schaltbare Eingangsfilteranordnung mit einem an eine Eingangsfaser über einen 1:n-Faserschalter anschaltbaren, vom Eingangssignal in Multiplexbetriebsrichtung durchlaufenen Wellenlängenkanalfilter eines mit einer Mehrzahl solcher Kanalfilter gebildeten Wellenlängenmultiplexers/-demultiplexers, einen vom Eingangssignal und einem Pumplasersignal gegensinnig durchlaufenen Frequenzumsetzer und ein Ausgangsfilter.

Die Erfindung zeigt nun einen Weg zu einer aufwandsgünstigen Realisierung der in einer derartigen Anordnungen zur optischen Frequenzumsetzung erforderlichen Filter.

Die Erfindung betrifft eine Schaltungsanordnung zur optischen Frequenzumsetzung mit einer schaltbaren Eingangsfilteranordnung mit einem an eine Eingangsfaser über einen 1:n-Faserschalter anschaltbaren, vom Eingangssignal in Multiplexbetriebsrichtung durchlaufenen Wellenlängenkanalfilter eines mit einer Mehrzahl solcher Kanalfilter gebildeten Wellenlängenmultiplexers/-demultiplexers, einem vom Eingangssignal und einem Pumplasersignal gegensinnig durchlaufenen Frequenzumsetzer und einem Ausgangsfilter; diese Schaltungsanordnung ist erfindungsgemäß dadurch gekennzeichnet, dass das Ausgangsfilter durch einen vom Ausgangssignal in Demultiplexbetriebsrichtung durchlaufenen Wellenlängenkanalfilter des Wellenlängenmultiplexers/-demultiplexers gebildet ist, das ausgangsseitig mit der Ausgangsfaser verbunden ist.

Die Erfindung, derzufolge mit dem ohnehin vorhandenen optischen Wellenlängenmultiplexer/demultiplexer auch die Aufgabe eines Ausgangsfilters erfüllt wird, bringt den Vorteil mit sich, ein gesondertes Ausgangsfilter und einen zwischen Wellenlängenmultiplexer/-demultiplexer und Frequenzumsetzer eingefügten optischen Richtkoppler nicht zu benötigen.

In weiterer Ausgestaltung der Erfindung können der Ausgang des in Demultiplexbetriebsrichtung durchlaufenen Wellenlängenkanalfilters des Wellenlängenmultiplexers/-demultiplexers und der ihm entsprechende Ausgang des 1:n-Faserschalters über einen 2:1-Auswahlschalter mit der Ausgangsfaser verbunden sein; dies ermöglicht es, auch ein nicht in seiner optischen Frequenz umzusetzendes Signal von der Eingangfaser zur Ausgangsfaser durchschalten zu können.

Weitere Besonderheiten der Erfindung werden aus der nachfolgenden näheren Erläuterung eines Ausführungsbeispiels anhand der Zeichnungen ersichtlich. Dabei zeigt
- FIG 1: schematisch eine Schaltungsanordnung zur optischen Frequenzumsetzung mit gesondertem Ausgangsfilter;
- FIG 2: zeigt schematisch eine Schaltungsanordnung zur optischen Frequenzumsetzung ohne gesondertes Ausgangsfilter.

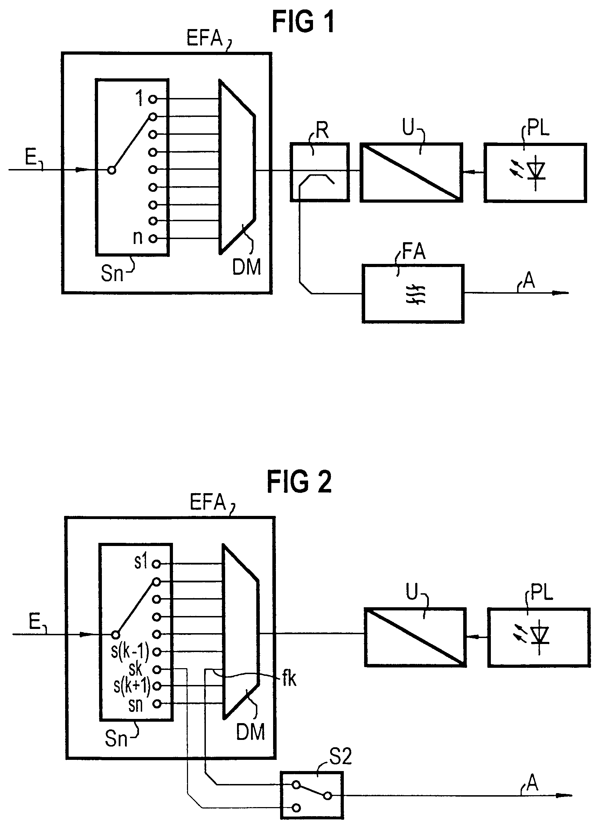

In der in FIG 1 skizzierten Schaltungsanordnung zur optischen Frequenzumsetzung ist eine schaltbare Eingangsfilteranordnung EFA mit einem an eine Eingangsfaser E angeschlossenen 1:n-Faserschalter Sn und einem Wellenlängenmultiplexer/-demultiplexer DM (siehe dazu auch IEEE Photon.Technol.Lett., 4(1992)8, 886...887) vorgesehen, der mit einer Mehrzahl von Wellenlängenkanalfiltern gebildet und mit diesen eingangsseitig an die Ausgänge des 1:n-Faserschalters Sn angeschlossen ist; dem Multiplexausgang des Wellenlängenmultiplexers/-demultiplexers DM ist über einen optischen Richtkoppler R ein Frequenzumsetzer U nachgeschaltet, der vom umzusetzenden Eingangssignal und einem von einem Pumplaser PL erzeugten Lichtignal, auf dessen Wellenlänge das Eingangssignal umzusetzen ist, gegensinnig durchlaufen wird.

Für das optische Eingangssignal, das eine in einem optischen Kanalraster 1...n liegende optische Eingangsfrequenz aufweist, wird in der mit Hilfe des optischen 1:n-Faserschalters Sn und des Wellenlängenmultiplexers/-demultiplexers DM realisierten schaltbaren Eingangsfilteranordnung EFA durch entsprechende Einstellung des 1:n-Faserschalters Sn das der optischen Eingangsfrequenz entsprechende Wellenlängenkanalfilter wirksam geschaltet; das Filter übernimmt dabei folgende Aufgaben:
Auswahl des Eingangskanals mit der umzusetzenden Wellenlänge,
Unterdrückung unerwünschter Signalanteile in den optischen Nachbarkanälen,
Begrenzung von im Eingangssignal vorhandenen optischen Rauschanteilen.

Der nachfolgende Frequenzumsetzer U, der z.B. nach dem Prinzip der Cross Gain Modulation oder der Cross Phase Modulation arbeiten kann, wird gegensinnig betrieben (siehe dazu auch ECOC'94, vol. 4, Post-deadline Papers, 67...70), d.h. das Eingangssignal und das Pumplasersignal, auf dessen Wellenlänge das Eingangssignal umgesetzt wird, durchlaufen den Frequenzumsetzer U in zueinander gegensinniger Richtung. Mittels des zwischen Wellenlängenmultiplexer/-demultiplexer DM und Frequenzumsetzer U eingefügten optischen Richtkopplers R wird das vom Eingangssignal modulierte Pumplasersignal auf ein Ausgangsfilter FA ausgekoppelt, das fest gewählt sein kann und folgende Aufgaben hat:
Filtern des gewünschten Ausgangskanals,
Unterdrückung unerwünschter Eingangssignalanteile,
Begrenzung von im Frequenzumsetzer entstandenen optischen Rauschanteilen.

In der in FIG 2 skizzierten Schaltungsanordnung zur optischen Frequenzumsetzung ist ebenfalls eine schaltbare Eingangsfilteranordnung EFA mit einem an eine Eingangsfaser E angeschlossenen 1:n-Faserschalter Sn und einem Wellenlängenmultiplexer/-demultiplexer DM vorgesehen, der mit einer Mehrzahl von Wellenlängenkanalfiltern gebildet und mit diesen eingangsseitig an die Ausgänge s1,...,sn des 1:n-Faserschalters Sn angeschlossen ist; an den Multiplexausgang des Wellenlängenmultiplexers/-demultiplexers DM ist ein Frequenzumsetzer U angeschlossen, der wiederum vom umzusetzenden Eingangssignal und dem von einem Pumplaser PL erzeugten Lichtignal, auf dessen Wellenlänge das Eingangssignal umzusetzen ist, gegensinnig durchlaufen wird.

Das Eingangssignal wird, wiederum mittels des optischen 1:n-Faserschalters Sn, auf denjenigen der (n-1) [in Multiplexbetriebsrichtung gesehen] Eingänge s1,...,s(k-1) und s(k+1), ...,sn des Wellenlängenmultiplexers/-demultiplexers DM geschaltet, der zu dem der optischen Eingangsfrequenz entsprechenden Wellenlängenkanalfilter führt. In der Richtung von links nach rechts, d.h. in Multiplexbetriebsrichtung, übernimmt damit der Wellenlängenmultiplexers/-demultiplexer DM wiederum die Aufgabe der Eingangsfilterung.

Der nachfolgende Frequenzumsetzer U wird wiederum gegensinnig betrieben, d.h. das Eingangssignal und das Pumplasersignal, auf dessen Wellenlänge das Eingangssignal umgesetzt wird, durchlaufen den Frequenzumsetzer U in zueinander gegensinniger Richtung. Das vom Eingangssignal modulierte Pumplasersignal, dessen feste optische Frequenz im optischen Kanalraster 1 ... n dem Kanal k entsprechen soll, gelangt nun zum Multiplexausgang/Demultiplexeingang des für das Ausgangssignal in Demultiplexrichtung wirksamen Wellenlängenmultiplexers/-demultiplexers DM und von hier weiter über das der optischen Ausgangsfrequenz entsprechende Wellenlängenkanalfilter zum Multiplexeingang/Demultiplexausgang fk, der zur Ausgangsfaser A führt. Der Wellenlängenmultiplexer/-demultiplexer DM übernimmt insoweit also auch die Aufgabe der Ausgangsfilterung.

Soll auch ein nicht in seiner optischen Frequenz umzusetzendes Signal von der Eingangfaser zur Ausgangsfaser durchgeschaltet werden können, so können, wie dies auch aus FIG 2 ersichtlich wird, der Ausgang fk des in Demultiplexbetriebsrichtung durchlaufenen Wellenlängenkanalfilters des Wellenlängenmultiplexers/-demultiplexers DM und der ihm entsprechende Ausgang sk des 1:n-Faserschalters Sn über einen 2:1-Auswahlschalter S2 mit der Ausgangsfaser A verbunden sein; das Eingangssignal kann dann von der Eingangsfaser E über den auf seinen Ausgang sk eingestellten 1:n-Faserschalter Sn und den 2:1-Auswahlschalter S2 ohne Frequenzumsetzung als Ausgangssignal auf die Ausgangsfaser A geleitet werden.

## Patentansprüche

1. Schaltungsanordnung zur optischen Frequenzumsetzung mit einer schaltbaren Eingangsfilteranordnung (EFA) mit einem an eine Eingangsfaser (E) über einen 1:n-Faserschalter (S) anschaltbaren, vom Eingangssignal in Multiplexerbetriebsrichtung durchlaufenen Wellenlängenkanalfilter eines mit einer Mehrzahl solcher Kanalfilter gebildeten Wellenlängenmultiplexers/-demultiplexers (DM), einem vom Eingangssignal und einem Pumplasersignal gegensinnig durchlaufenen Frequenzumsetzer (U) und einem Ausgangsfilter,
**dadurch gekennzeichnet,**
dass das Ausgangsfilter durch einen vom Ausgangssignal in Demultiplexbetriebsrichtung durchlaufenen Wellenlängenkanalfilter des Wellenlängenmultiplexers/-demultiplexers (DM) gebildet ist, das ausgangsseitig mit der Ausgangsfaser (A) verbunden ist.

2. Schaltungsanordnung nach Anspruch 1,
**dadurch gekennzeichnet,**
dass der Ausgang (fk) des in Demultiplexbetriebsrichtung durchlaufenen Wellenlängenkanalfilters des Wellenlängenmultiplexers/-demultiplexers (DM) und der ihm entsprechende Ausgang (sk) des 1:n-Faserschalters (Sn) über einen 2:1-Auswahlschalter (S2) mit der Ausgangsfaser (A) verbunden sind.
